# EUROPEAN PATENT SPECIFICATION

(11) **EP 3 865 282 B1**
(45) Date of publication and mention of the grant of the patent: **01.05.2024**
(21) Application number: 19885799.7
(22) Date of filing: 18.07.2019
(51) Int. Cl.: B29C 64/112, B29C 64/393, B33Y 10/00, B33Y 50/02

(54) **THREE-DIMENSIONAL PRINTING METHOD AND THREE-DIMENSIONAL PRINTING SYSTEM**
VERFAHREN ZUM DREIDIMENSIONALEN DRUCKEN UND SYSTEM ZUM DREIDIMENSIONALEN DRUCKEN
PROCÉDÉ D'IMPRESSION TRIDIMENSIONNELLE ET SYSTÈME D'IMPRESSION TRIDIMENSIONNELLE

(30) Priority: 14.11.2018 CN 201811353214
(43) Date of publication of application: 18.08.2021
(73) Proprietor: ZHUHAI SAILNER 3D TECHNOLOGY CO., LTD., Zhuhai, Guangdong 519000 (CN)
(72) Inventor: MA, DaRong, Zhuhai, Guangdong 519060 (CN); CHEN, Wei, Zhuhai, Guangdong 519060 (CN)
(74) Representative: Sun, Yiming
(86) International application number: PCT/CN2019/096542
(87) International publication number: WO 2020/098303

(56) References cited:
- CN-A- 105 856 562
- CN-A- 106 827 527
- CN-A- 107 471 826
- CN-A- 107 718 530
- CN-A- 109 304 872
- US-A1- 2016 193 858
- US-A1- 2016 236 411
- US-A1- 2016 236 411
- US-A1- 2017 182 798
- US-A1- 2018 071 983

## Description

### TECHNICAL FIELD

The present invention generally relates to the field of three-dimensional inkjet printing technology and, more particularly, relates to a three-dimensional printing method and a three-dimensional printing system.

Specifically, the invention relates to a three-dimensional printing method as set out in claim 1.

The invention also relates to a three-dimensional printing system as set out in claim 7.

### BACKGROUND

Document US 2016/0236411 A1 discloses a three-dimensional printing method and a three-dimensional printing system as specified above. Specifically, this document discloses a liquid discharge apparatus and method. The apparatus includes a head unit, a main scan driver, and a controller. The head unit has a plurality of nozzle arrays disposed next to one another in a main scanning direction and positions of nozzles in each of the nozzle arrays differ in an orthogonal direction from positions of the nozzles in other nozzle arrays. The controller is configured to set a two-dimensional printing mode and an object shaping mode. The main scan driver regulates a moving speed to a preset first speed and prompts the head unit to perform the main scan at the first speed when the apparatus is in the two-dimensional printing mode and regulates the moving speed at least at a certain timing to a second speed lower than the first speed and prompts the head unit to perform the main scan at the second speed when the apparatus is in the object shaping mode.

In existing three-dimensional inkjet printers, due to the limitations of manufacturing processes and equipment costs, the nozzle resolution of nozzle columns of a printhead is lower than the printing resolution of a target three-dimensional object. In order to improve the nozzle resolution of the printhead, three-dimensional printing may be performed by disposing a plurality of nozzle columns in parallel with each other along a row direction and by arranging the nozzles on the plurality of nozzle columns to be staggering with each other along a column direction. In such way, the nozzles on the printhead may deposit ink drops at different positions along the column direction, thereby improving the printing resolution of the printhead along the column direction.

However, in multi-material printing, a plurality of staggering nozzle columns may be configured to eject different printing materials. Therefore, in a single main scanning operation, different materials deposited by the nozzles on the different nozzle columns may be sequentially arranged along the column direction. For a single-type material, its resolution along the column direction may be equal to the resolution of the nozzle columns on the printhead. In order to improve the resolution of the single-type material along the column direction, multi-pass printing may need to be used. That is, a certain distance may be moved along the column direction between the two main scanning operations, such that in two adjacent main scanning operations, a same nozzle may deposit ink droplets at adjacent positions along the column direction, thereby implementing the resolution improvement of the single-type material along the column direction.

However, in a previous scanning operation, the nozzles on the other nozzle columns may have already deposited ink droplets at such position, so that the ink droplets deposited in a next scanning operation may be superimposed on the ink droplets deposited in the previous scanning operation. Since the nozzle columns on the printhead are arranged staggering with each other, such multi-pass printing implementation used to increase the printing resolution may result in the formation of inclined surfaces at the two end faces of the target three-dimensional object, which may affect the shape-forming resolution of the surface of the three-dimensional object.

### SUMMARY

One aspect of the present invention provides a three-dimensional printing method as defined in the respective independent claim attached.

Another aspect of the present invention provides a three-dimensional printing system as defined in the respective independent claim attached.

Preferred embodiments of the method ad the system according to the invention are defined in respective dependent claims attached.

### BRIEF DESCRIPTION OF THE DRAWINGS

In order to clearly illustrate the technical solutions in various embodiments of the present invention, the drawings, which are required to be configured in the description of the disclosed embodiments, are briefly described hereinafter. It should be understood that the following drawings are merely some embodiments of the present invention and are not to be considered as the scope limitation.
FIG. 1 illustrates a structural schematic of a printhead;
FIG. 2 illustrates a flowchart of a three-dimensional printing method according to exemplary embodiment one of the present invention;
FIG. 3 illustrates a schematic of control data generation in a three-dimensional printing method according to exemplary embodiment one of the present invention;
FIG. 4 illustrates a schematic of performing slicing processing on a target three-dimensional object in a three-dimensional printing method according to exemplary embodiment one;
FIG. 5A illustrates a schematic of initial control data of a layer s1 in a three-dimensional printing method according to exemplary embodiment one;
FIG. 5B illustrates a schematic of control data of a layer s1 in a three-dimensional printing method according to exemplary embodiment one;
FIG. 6 illustrates a shape-forming schematic for generating a layer s1 based on control data in a three-dimensional printing method according to exemplary embodiment one;
FIG. 7 illustrates a structural schematic of a generated layer s1 based on control data in a three-dimensional printing method according to exemplary embodiment one;
FIG. 8 illustrates another shape-forming schematic for generating a layer s1 based on control data in a three-dimensional printing method according to exemplary embodiment one;
FIG. 9 illustrates a third shape-forming schematic for generating a layer s1 based on control data in a three-dimensional printing method according to exemplary embodiment one;
FIG. 10 illustrates a structural schematic of a three-dimensional printing system according to exemplary embodiment two;
FIG. 11 illustrates a configuration schematic of nozzle columns in a three-dimensional printing system according to exemplary embodiment two;
FIG. 12A illustrates a schematic of initial control data generated based on a printhead configuration in a three-dimensional printing system according to exemplary embodiment two;
FIG. 12B illustrates a schematic of control data generated based on a printhead configuration in a three-dimensional printing system according to exemplary embodiment two;
FIG. 13 illustrates another configuration schematic of nozzle columns on a printhead in a three-dimensional printing system according to exemplary embodiment two;
FIG. 14A illustrates a schematic of initial control data generated based on a printhead configuration in a three-dimensional printing system according to exemplary embodiment two; and
FIG. 14B illustrates a schematic of control data generated based on a printhead configuration in a three-dimensional printing system according to exemplary embodiment two.

### DETAILED DESCRIPTION

In order to illustrate objectives, technical solutions and advantages of various embodiments of the present invention more clearly, the technical solutions in various embodiments of the present invention may be clearly and completely described with reference to the drawings in various embodiments hereinafter. Obviously, the described embodiments may be a portion of various embodiments, not all of various embodiments, of the present invention.

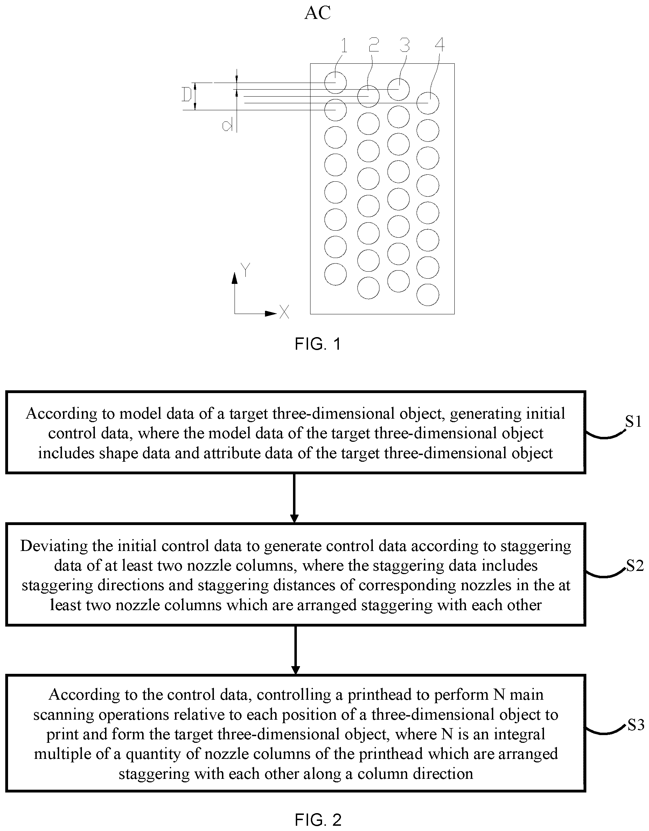

FIG. 1 illustrates a structural schematic of a printhead in the existing technology. Referring to FIG. 1, the printhead may include a plurality of nozzles arranged in the form of rows and columns (nozzles arranged on a same column may refer to a nozzle column), and four nozzle columns of the printhead may be sequentially disposed along a row direction. The extending direction of the nozzles at the nozzle column may be the column direction, and the arrangement direction of a plurality of nozzle columns may be the row direction, where the row direction may be perpendicular to the column direction. For example, the printhead may include four nozzle columns sequentially arranged along a first direction X; four nozzle columns may be arranged staggering with each other along a second direction Y; a spacing (e.g., distance) between adjacent nozzles in one nozzle column may be D; and the spacing (e.g., distance) D between adjacent nozzles in any one nozzle column may be divided into four equal portions by the nozzles of three other nozzle columns. For example, the first nozzles of a 2nd nozzle column, a 3rd nozzle column, and a 4th nozzle column may divide the spacing D between a first nozzle and a second nozzle of a 1st nozzle column into four equal portions. That is, the distance between the first nozzle of the 1st nozzle column and the first nozzle of the 3rd nozzle column along the second direction Y may be d; the distance between the first nozzle of the 3rd nozzle column and the first nozzle of the 2nd nozzle column along the second direction Y may be d; the distance between the first nozzle of the 2nd nozzle column and the first nozzle of the 4th nozzle column along the second direction Y may be d; and the distance between the first nozzle of the 4th nozzle column and the second nozzle of the 1st nozzle column along the second direction Y may be d. Therefore d=D/4, that is, using the position of the nozzles on the 1st nozzle column as the reference, the 2nd, 3rd, and 4th nozzle columns may be deviated by 2d, d, and 3d along the -Y direction relative to the 1st nozzle column, respectively, that is, D/2, D/4, 3D/4. In a single main scanning operation, the nozzles on different nozzle columns of the printhead may respectively deposit ink droplets at different positions along the second direction Y Therefore, the printing resolution along the second direction Y may be four times the nozzle resolution of the nozzle columns on the printhead. That is, for single-material printing, such type of printhead may increase the printing resolution to be four times the nozzle resolution.

However, in multi-material printing, a plurality of staggering nozzle columns may be configured to eject different printing materials. Therefore, in a single main scanning operation, different materials deposited by the nozzles on the different nozzle columns may be sequentially arranged along the column direction. For a single-type material, the resolution along the column direction may be equal to the nozzle resolution of the nozzle columns on the printhead.

In order to improve the resolution of the single-type material along the column direction, multi-pass printing may need to be used. That is, a certain distance may be moved along the column direction between the two main scanning operations, such that in two adjacent main scanning operations, a same nozzle may deposit ink droplets at adjacent positions along the column direction, thereby implementing the resolution improvement of the single-type material along the column direction.

However, in a previous scan, the nozzles on the other nozzle columns may have already deposited ink droplets at such position, so that the ink droplets deposited in a next scan may be superimposed on the ink droplets deposited in the previous scan.

Since the nozzle columns on the printhead are arranged staggering with each other, such multi-pass printing implementation used to increase the printing resolution may result in the formation of inclined surfaces at the two end faces of a target three-dimensional object, which may affect the shape-forming resolution of the surface of the three-dimensional object and also have a certain impact on the performance of the target three-dimensional object.

In order to improve the shape-forming accuracy of the surface of three-dimensional object and eliminate the inclined surfaces generated in multi-pass printing, the present application provides a three-dimensional printing method. By deviating the control data of the nozzle columns which are arranged staggering with each other along the column direction in multi-pass printing, the portion of the nozzle columns does not include any control data in the first N rows of data and the last N rows of data, which may avoid inclined surfaces at two ends of the shape-forming layer and improve the shape-forming resolution of the surface of the three-dimensional object. The method and system provided in the present application may be described in detail through different exemplary embodiments hereinafter.

### Exemplary embodiment one

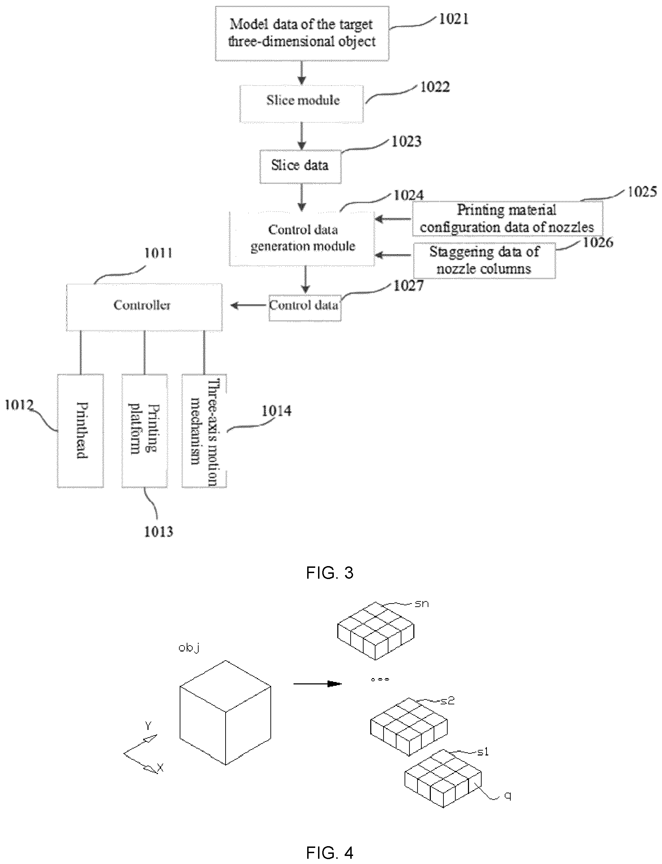

FIG. 2 illustrates a flowchart of the three-dimensional printing method according to exemplary embodiment one; and FIG. 3 illustrates a schematic of control data generation in the three-dimensional printing method according to exemplary embodiment one. Referring to FIGS. 2-3, the three-dimensional printing method provided by various embodiments of the present application may use a three-dimensional printing system to print a target three-dimensional object, where the three-dimensional printing system may include a controller 1011, a printhead 1012 and a printing platform 1013 which are electrically connected to the controller 1011. The printhead 1012 may include a plurality of nozzles arranged in the form of rows and columns, and at least two nozzle columns may be arranged sequentially along the row direction and arranged staggering with each other along the column direction. The above-mentioned method may include the following steps.

At S1, according to model data 1021 of the target three-dimensional object, initial control data may be generated.

For example, S1 may include generating slice data 1023 of the three-dimensional object according to the model data 1021 of the target three-dimensional object, and generating the initial control data according to the slice data 1023 and preset parameters.

The model data 1021 of the target three-dimensional object may include shape data and attribute data of the target three-dimensional object; the above-mentioned preset parameters may include printing material configuration data 1025 of the nozzles and printing parameters; and the printing parameters may include a quantity N of the N main scanning operations performed by the printhead 1012 relative to each position of the target three-dimensional object and/or a printing resolution of the target three-dimensional object.

FIG. 4 illustrates a schematic of performing slicing processing on the target three-dimensional object in the three-dimensional printing method according to exemplary embodiment one. Referring to FIG. 4, the three-dimensional model data 1021 of the three-dimensional object obj may be sliced by a slice module 1022 to obtain the slice data 1023; the slice data 1023 may include a plurality of slice layers s1-sN, and each slice layer may include a plurality of voxels q; the size of voxel q may be determined by a target printing resolution; and the larger the target printing resolution is, the smaller the voxel is. Color printing may be taken as an example for description in one embodiment. For the convenience of description, the target three-dimensional object obj may be configured as a colored cube in one embodiment. In order to achieve full-color printing, it is necessary to use four printing materials of C, M, Y, and K. Obviously, other color materials, such as R, G, B and the like, may also be configured for printing, which may not be limited herein according to various embodiments of the present application. Correspondingly, the printing material configuration data 1025 of the nozzles may be configured to specify the type of a material ejected by each nozzle column. For example, the printing material configuration data 1025 of the nozzles may be that the 1st, 2nd, 3rd, and 4th nozzle columns eject four different color materials C, Y, M, and K respectively; obviously, the material configuration manner of each nozzle column on the printhead 1012 may not be limited herein, and any other configuration manner may also be configured.

At S2, the initial control data may be deviated to generate control data 1027 according to staggering data 1026 of the nozzle columns.

The staggering data 1026 of the nozzle columns may be staggering directions and staggering distances of each nozzle of nozzles in at least two columns which are arranged staggering with each other. The deviation direction of the initial control data may be opposite to the staggering direction, and the deviation distance of the initial control data may be equal to the staggering distance.

The staggering data 1026 of the nozzle columns may include the direction and distance of each nozzle column position relative to the reference position as described above. As shown in FIG. 1, taking the 1st nozzle column as the reference, the 1st, 2nd, 3rd, and 4th nozzle columns may be deviated from the reference by 0, 2d, d, and 3d respectively along the -Y direction, that is, 0, D/2, D/4, 3D/ 4. It should be noted that the quantity of the nozzle columns and the quantity of the nozzles in each nozzle column shown in FIG. 1 may only be exemplary, which may not be limited according to various embodiments in the present application. Furthermore, the staggering method of the plurality of nozzle columns may not be limited to the above-mentioned configuration, and the 2nd, 3rd, and 4th nozzle columns may also be sequentially deviated by D/4, D/2, and 3D/4 relative to the 1st nozzle column.

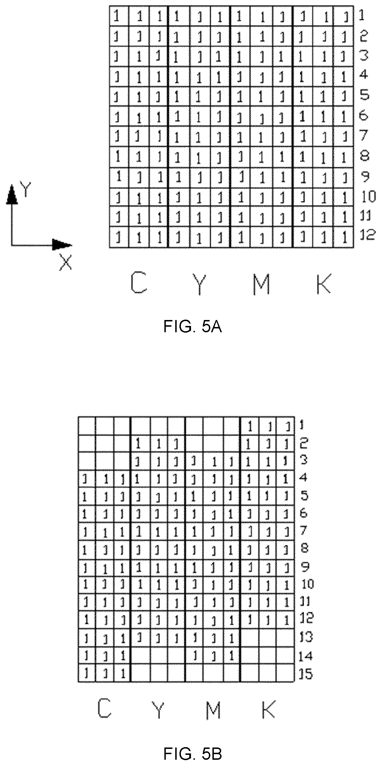

FIG. 5A illustrates a schematic of initial control data of the layer s1 in the three-dimensional printing method according to exemplary embodiment one; and FIG. 5B illustrates a schematic of control data of the layer s1 in the three-dimensional printing method according to exemplary embodiment one. As shown in FIGS. 5A-5B, FIG. 5A may be the initial control data generated based on the slice data 1023 of the single layer s1, the printing material configuration data 1025 of the nozzles and the printing parameters; and FIG. 5B may be the control data 1027 generated based on the initial control data and the staggering data 1026 of the nozzle columns. Each nozzle column may show three columns of data. For example, the staggering data 1026 of the nozzle columns may include that: taking the 1st nozzle column C as the reference, the 2nd nozzle column Y, the 3rd nozzle column M, and the 4th nozzle column K may be sequentially deviated by D/2, D/4 and 3D/4, along the -Y direction. Therefore, taking the control data of the 1st nozzle column C as the reference, the control data of the 2nd nozzle column Y, the 3rd nozzle column M, and the 4th nozzle column K may be sequentially deviated by D/2, D/4 and 3D/4 along the Y direction from the control data of the 1st nozzle column C.

In an implementation manner, the nozzles on any three nozzle columns on the printhead 1012 may divide the spacing D between adjacent nozzles of another nozzle column into four equal portions in one embodiment, that is, at least four ink droplets may be deposited within the range of one spacing D between adjacent nozzles. 4-pass printing may be configured to obtain a printing resolution four times the nozzle resolution of the nozzle columns on the printhead 1012, or 8-pass printing may be configured to obtain a printing resolution 8 times the nozzle resolution of the nozzle columns on the printhead 1012. If 4-pass printing is performed, four voxels q may be formed within the range of one spacing D between adjacent nozzles, such that the size of each voxel q along the second direction Y may be 1/4 times the spacing (e.g., distance) D between adjacent nozzles on each nozzle column, that is, D/4; and if 8-pass printing is performed, eight voxels q' may be formed within the range of one spacing D between adjacent nozzles, such that the size of each voxel q' along the second direction Y may be 1/8 times the spacing (e.g., distance) D between adjacent nozzles on each nozzle column, that is, D/8. N-pass printing may indicate that each nozzle of the printhead 1012 may perform N main scanning operations relative to each position, and each position may include the range of one spacing between adjacent nozzles. That is, in 4-pass printing, each nozzle on the printhead 1012 may performs four main scanning operations relative to the position in the range of one spacing between adjacent nozzles; in order to further improve the printing resolution, in 8-pass printing, each nozzle on the printhead 1012 may perform 8 main scanning operations relative to the position in the range of one spacing between adjacent nozzles. Furthermore, it should be noted that the multiples of the printing resolution available for the 4-pass printing and 8-pass printing may not be limited to four and eight, and may also be other printing resolution multiples less than the quantity of passes. For example, in the 4-pass printing, each nozzle in the nozzle column may only eject two ink droplets within the range of one spacing between adjacent nozzles to form two voxels, thereby obtaining the printing resolution that is two times the nozzle resolution of the nozzle columns on the printhead 1012. For example, in the four main scanning operations performed by any nozzle at the position relative to the range of one spacing between adjacent nozzles, ink droplets may be deposited only in the first main scanning operation and the third main scanning operation, or ink droplets may be deposited only in the second main scanning operation and the fourth main scanning operation; similarly, other printing resolution multiples may also be obtained. In the 3D printing, it is desirable to obtain larger printing resolution for a same operating process. Therefore, the present application may mainly focus on the solution with higher printing resolution that can be obtained with a same quantity of passes. The 4-pass printing or 8-pass printing described hereinafter may be the solution capable of obtaining the printing resolution four times or eight times the nozzle resolution of the nozzle columns on the printhead 1012.

Therefore, in the 4-pass printing, the deviation of the initial control data based on the staggering data 1026 of the nozzle columns may include, for example, taking the control data of the 1st nozzle column C as the reference, sequentially deviating the data of the 2nd nozzle column Y, the 3rd nozzle column M, and the 4th nozzle column K along the Y direction by the position of 2 voxels q, the position of 1 voxel q, and the position of 3 voxels q. Similarly, in the 8-pass printing, the deviation of the initial control data may include, taking the control data of the 1st nozzle column C as the reference, sequentially deviating the data of the 2nd nozzle column Y, the 3rd nozzle column M, and the 4th nozzle column K along the Y direction by the position of 4 voxels q', the position of 2 voxels q', and the position of 6 voxels q'. FIGS. 5A-5B may be the initial control data and the control data 1027 which are generated for performing the 4-pass printing. In the control data 1027, a portion of the nozzle columns may not have the control data in the first 4 rows of data and the last 4 rows of data. It should be understood that in the control data 1027 generated for performing the 8-pass printing, a portion of the nozzle columns may not have the control data in the first 8 rows of data and the last 8 rows of data.

In the initial control data and control data 1027, a square may represent a voxel position. The number "1" or "0" in the square may represent the control data of a corresponding nozzle column on the printhead 1012 at the position of the voxel. The number "1" may indicate that the ejection is performed at the voxel position, the number "0" may indicate that the ejection is not performed at the voxel position, and the blank in the square may indicate that there is no control data at the voxel position for the printhead 1012.

For example, each row of data in the control data 1027 may be configured to control the ejection of a nozzle group on the printhead 1012 in a main scanning operation. Therefore, as shown in FIG. 5A, in the 4-pass printing, each nozzle group may correspond to 4 rows of data, which are configured to control the ejection of a corresponding nozzle group in each main scanning operation. In the initial control data, the control data configured to print a same voxel may be located in a same row of data; while in the control data 1027, the control data configured to print a same voxel may be distributed in multiple rows of data. The nozzle group may include nozzles at a same position on each nozzle column. For example, the first nozzles in the 1st nozzle column C, the 2nd nozzle column Y, the 3rd nozzle column M, and the 4th nozzle column K may be a nozzle group.

As shown in FIG. 5B, in the control data 1027 after performing the deviation, a portion of the nozzle columns may not have the control data in the first 4 rows of data and the last 4 rows of data of the control data 1027 of the single layer s1. That is, in each layer, in the four main scanning operations configured to form the two end positions of the layer s1, a portion of the corresponding nozzles in the nozzle groups which perform printing at the two end positions may not have control data. That is, in four main scanning operations, a portion of the corresponding nozzles in the nozzle groups that perform printing at the two end positions may not perform ejection.

At S3, according to the control data 1027, the printhead 1012 is controlled to perform N main scanning operations relative to each position of the three-dimensional object to print and form the target three-dimensional object, where N is an integral multiple of a quantity of nozzle columns of the printhead which are arranged staggering with each other along the column direction.

For example, according to the control data, the printhead 1012 and the printing platform 1013 may be controlled to move relative to each other along the row direction of the nozzles to perform the main scanning operations.

Before performing a next main scanning operation, the printhead 1012 and the printing platform 1013 is controlled to move relative to each other along the column direction of the nozzles.

A plurality of main scanning operations may be repeatedly preformed to form a shape-forming layer of the target three-dimensional object.

The printhead 1012 and the printing platform 1013 may be controlled to move relative to each other along the direction perpendicular to the nozzle plane to superimpose a plurality of shape-forming layers, thereby printing and forming the target three-dimensional object.

As set out in claim 1, between two adjacent main scanning operations among the N main scanning operations performed at each position, the controller controls the printhead to move by a moving distance along the column direction of the nozzles, where the moving distance is obtained by adding or subtracting a deviation distance based on a step distance. The deviation distance may be equal to a single spacing D between adjacent nozzles divided by N.

As set out in claim 1, the step distance is zero or includes multiple spacings, where each spacing is a distance between adjacent nozzles.

Optionally, when the step distance is zero, the N main scanning operations performed at each position are completed, and the controller may control the printhead to move a distance of the length of the printhead relative to the position of the printhead in the first main scanning operation of the performed N main scanning operations along the column direction of the nozzles.

Furthermore, the present application may take the 4-pass printing as an example to illustrate the shape-forming process of the three-dimensional object, each nozzle of the printhead 1012 may perform N main scanning operations relative to each position including one spacing between adjacent nozzles. Correspondingly, in the control data 1027, each nozzle group may correspond to four rows of data, and each row of the data may be respectively configured to control the ejection of the nozzles in a corresponding nozzle group for different main scanning operations. The process of performing the three-dimensional printing based on the control data 1027 shown in FIG. 5B may be described hereinafter. Multi-pass printing may include small spacing multi-pass printing and large spacing multi-pass printing.

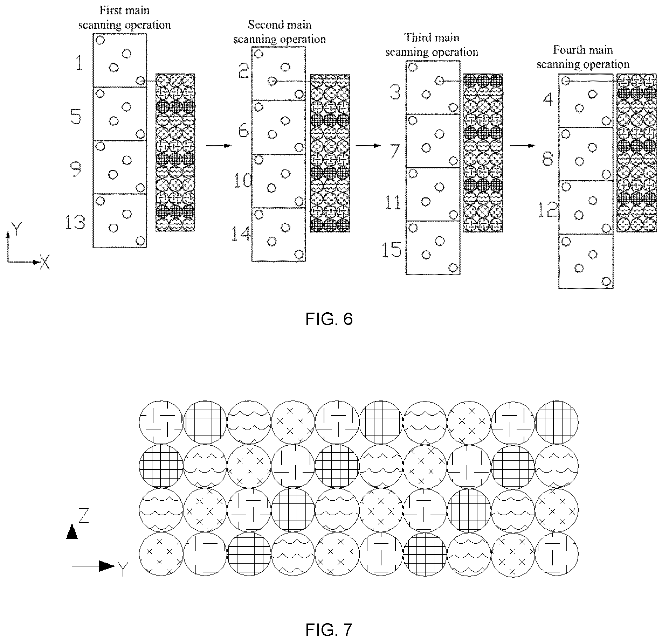

First, the small spacing 4-pass printing may be taken as an example for description in exemplary embodiment one. FIG. 6 illustrates a shape-forming schematic for generating the layer s1 based on control data in the three-dimensional printing method according to exemplary embodiment one. For example, the shape-forming process of forming the single layer s1 may be based on the control data 1027. In one embodiment, the printhead 1012 may include four nozzle groups, and the number on the left side of each nozzle group may indicate the row number of the control data for performing ejection. For example, in the 1-pass printing, the first nozzle group may perform ejection based on the 1st row of data, and the second nozzle group may perform ejection based on the 5th row of data. The shape-forming process of the layer s1 may include the following steps.

For the first main scanning operation, the printhead 1012 may be located at position 1, and the first nozzle group, the second nozzle group, the third nozzle group, and the fourth nozzle group may all be located in the printing region; the first nozzle group on the printhead 1012 may perform printing based on the 1st row of data in the control data 1027; in the 1st row of data, the positions corresponding to the 1st nozzle column C, the 2nd nozzle column Y, and the 3rd nozzle column M may not have control data, that is, the nozzles on the 1st nozzle column C, the 2nd nozzle column Y, and the 3rd nozzle column M in the first nozzle group may not perform ejection at corresponding voxels; only the control data corresponding to the 4th nozzle column K is "1", that is, the nozzles on the 4th nozzle column K in the first nozzle group may perform ejection at corresponding voxels; correspondingly, the second nozzle group, the third nozzle group, and the fourth nozzle group may perform ejection based on the 5th, 9th and 13th rows of the control data 1027, respectively, that is, the 1st row of the four rows of the control data corresponding to the nozzles in each nozzle group; and based on the data at the 13th row, it can be noted that the nozzles on the 4th nozzle column K in the fourth nozzle group may not have control data, that is, ejection may not be performed at corresponding voxels.

For the second main scanning operation, the printhead 1012 may be deviated by a distance (D/4) of one voxel q along the second direction Y to position 2, that is, the printhead may move D/4 along the -Y direction; at this point, the nozzles on the 2nd nozzle column Y in the first nozzle group may move to the positions of the nozzles on the 4th nozzle column K in the first nozzle group during the 1-pass printing process; the first nozzle group, the second nozzle group, the third nozzle group and the fourth nozzle group may be still located in the printing region at this point, such that the nozzles on each nozzle column in the first nozzle group may perform printing based on the 2nd row of data; in the 2nd row of data, the control data corresponding to the 2nd nozzle column Y and the 4th nozzle column K may be "1", and the 1st nozzle column C and the 3rd nozzle column M may not have control data, that is, the nozzles on the 2nd nozzle column Y and the 4th nozzle column K in the first nozzle group may perform ejection at corresponding voxels; however, the nozzles on the 1st nozzle column C and the 3rd nozzle column M in the first nozzle group may not perform ejection at corresponding voxels; correspondingly, the second nozzle group, the third nozzle group, and the fourth nozzle group may perform printing based on the 6th, 10th and 14th rows of data, respectively, that is, the 2nd row of the four rows of the control data corresponding to each nozzle group located in the printing region; and based on the data in the 14th row, it may be noted that the nozzles on the 2nd nozzle column Y and the 4th nozzle column K in the fourth nozzle group may not have control data, that is, ejection may not be performed in corresponding voxels.

Subsequently, the printhead 1012 may be sequentially deviated by a distance (D/4) of one voxel distance along the second direction Y to position 3 and position 4 to perform the third main scanning operation and the fourth main scanning operation. The first nozzle group, the second nozzle group, the third nozzle group, and the fourth nozzle group on the printhead 1012 located in the printing region may perform the third main scanning operation based on the data in the 3rd, 7th, 11th and 15th rows in the control data 1027, that is, the 3rd row of the 4 rows of control data corresponding to each nozzle group located in the printing region. The first nozzle group, the second nozzle group, and the third nozzle group located in the printing region may perform the fourth main scanning operation based on data in the 4th, 8th and 12th rows, respectively, that is, the 4th row of the 4 rows of data corresponding to each nozzle group located in the printing region. For the third main scanning operation, in the 3rd row of data, the nozzles on the 1st nozzle column C in the first nozzle group may not have control data, that is, ejection may not be performed in corresponding voxels. However, for the fourth main scanning operation, the fourth nozzle group on the printhead 1012 may be outside of the printing region, the nozzles on all nozzle columns may not have control data, that is, ejection may not be performed.

FIG. 7 illustrates a structural schematic of the generated layer s1 based on control data in the three-dimensional printing method according to exemplary embodiment one. As shown in FIG., 7, the patterns formed in the main scanning operations 1, 2, 3, and 4 may be superimposed along a third direction to form the layer s1, two ends of the layer s1 formed based on the control data 1027 may not have inclined surfaces, and the printing resolution of each material may be equal to 4 times the nozzle resolution of the nozzle columns on the printhead 1012.

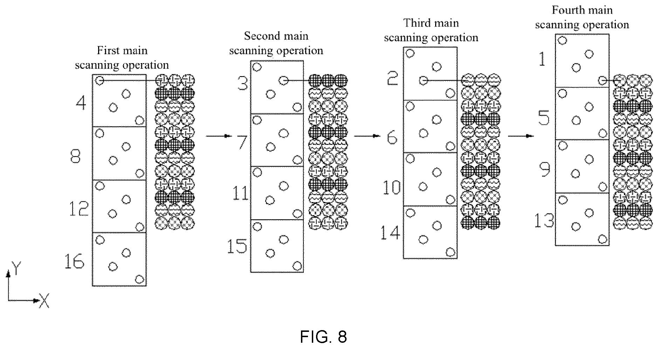

Furthermore, in the printing method described above, the deviation direction of the printhead 1012 along the second direction Y may be the -Y direction; and the deviation direction of the printhead 1012 along the second direction Y may also be the Y direction in the present application. FIG. 8 illustrates another shape-forming schematic for generating the layer s1 based on control data in the three-dimensional printing method according to exemplary embodiment one. As shown in FIG. 8, the difference between this shape-forming process and the above-mentioned shaped-forming process may be that the first main scanning operation may be based on the 4th row of data in the four rows of data corresponding to each nozzle group located in the printing region, the second main scanning operation may be based on the 3rd row of data in the four rows of data corresponding to each nozzle group located in the printing region, and the four main scanning operations may be completed sequentially. The layer s1 formed using such manner may be same as the layer s1 in the above-mentioned shape-forming process, two ends of the layer s1 may not have inclined surfaces, and the printing resolution of each material may be equal to four times the nozzle resolution of the nozzle columns on the printhead 1012.

It should be noted that in actual printing, the quantity of nozzles on each nozzle row of the printhead 1012 may be greatly greater than the quantity of nozzles on each nozzle row of the printhead 1012 as described above, and an actual printed three-dimensional object obj may also be greatly larger than the size of the above-mentioned three-dimensional object obj. Therefore, the quantity of rows and columns of the data in the control data 1027 may also be significantly greater than the quantity of rows and columns of each data in the control data 1027 as described above. However, regardless of the size of the three-dimensional object obj and the quantity of nozzles in the nozzle column, in the 4-pass printing as described above, the first 4 rows and the last 4 rows of the control data 1027 after deviation (the 4th row of the 4 rows of data corresponding to the fourth nozzle group, that is, the 16th row of data, may not have control data, not shown in FIG. 8) may always have blanks, that is, may not have control data. For example, in the 1st row of the first 4 rows of data, the 1st nozzle column C, the 2nd nozzle column Y, and the 3rd nozzle column M may not have control data; and in the 1st row of the last 4 rows of data, the 4th nozzle column K may not have control data. In the 2nd row of the first 4 rows of data, the 1st nozzle column C and the 3rd nozzle column M may not have control data; in the 2nd row of the last 4 rows of data, the 2nd nozzle column Y and the 4th nozzle column K may not have control data; and other positions without control data may not be repeated in detail herein.

Furthermore, if the size of the three-dimensional object obj along the second direction Y exceeds the size of the printhead 1012 along the second direction, the quantity of rows of the control data 1027 may vary with the size of the target three-dimensional object obj accordingly. However, the first 4 rows and the last 4 rows of the control data 1027 (the 4th row of the 4 rows of data corresponding to the fourth nozzle group, that is, the 16th row of data, may not have control data, not shown in FIG. 8) may also have blanks, that is, may not have control data. The printhead 1012 may perform four main scanning operations with respect to a single region, that is, complete the printing of one region of the layer s1, and the region may be the region covered by the printhead along the second direction Y Therefore, the printhead 1012 may need to step a distance (i.e., a step distance) of one printhead 1012 along the second direction Y relative to the position of the printhead 1012 in the first main scanning of four main scanning operations, and another region of the layer s1 may continue to be printed based on the remaining control data till the printing of the layer s1 is completed. In such way, the first 4 rows of data and the last 4 rows of data as described above may be used to perform printing at different regions of the shape-forming process.

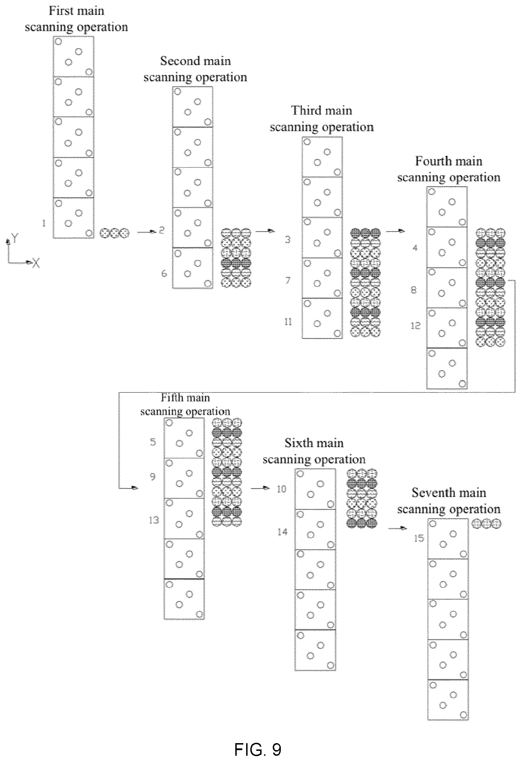

Performing the three-dimensional printing based on the control data 1027 may not be limited to the above-mentioned printing manner and may also be large spacing multi-pass printing. Large spacing 4-pass printing may be taken as an example for description in one embodiment. In such printing manner, the nozzles on the printhead 1012 may need to be divided into four equal portions along the second direction Y, and one nozzle may be reserved on each nozzle row at the rear side of the moving direction of the printhead 1012 along the second direction Y FIG. 9 illustrates a third shape-forming schematic for generating the layer s1 based on control data in the three-dimensional printing method according to exemplary embodiment one. As shown in FIG. 9, each square on the printhead 1012 may represent an equal portion. The moving direction of the printhead 1012 along the second direction Y as the -Y direction may be taken as an example. Similarly, for ease of description, the nozzles at a same position on each nozzle row may be a nozzle group, the nozzles reserved on each nozzle row may be a reserved nozzle group, and each equal portion may include a plurality of nozzle groups. For ease of description, in one embodiment, each equal portion may include only one nozzle group. For example, the plurality of nozzle groups may include a reserved nozzle group, a first nozzle group, a second nozzle group, ..., on the printhead 1012 along the -Y direction.

For example, for the first main scanning operation, when the printhead 1012 is located at position 1, the fourth nozzle group on the printhead 1012 may enter the printing region, and the fourth nozzle group may be the first nozzle group located in the printing region. Therefore, the nozzles in the fourth nozzle group on the printhead 1012 may perform printing based on the 1 st row of data, that is, the 1 st row of the 4 rows of data corresponding to the first nozzle group located in the printing region. At this point, the 1st nozzle column C, the 2nd nozzle column Y, and the 3rd nozzle column M in the fourth nozzle group may not have control data. The control data corresponding to the 4th nozzle column K may be "1", that is, the nozzles on the fourth nozzle row K in the fourth nozzle group may perform ejection at corresponding voxels; however, the nozzles on the 1st nozzle column C, the 2nd nozzle column Y, and the 3rd nozzle column M in the fourth nozzle group may not perform ejection at corresponding voxel positions.

For the second main scanning operation, the printhead 1012 may step one spacing D between adjacent nozzles and deviate the distance (D/4) of one voxel q along the same second direction Y, that is D+D/4, to be located at position 2; and the fourth nozzle group and the third nozzle group on the printhead 1012 may enter the printing region. In such way, the third nozzle group may be the first nozzle group located in the printing region, and the fourth nozzle group may be the second nozzle group located in the printing region. Therefore, the third nozzle group on the printhead 1012 may perform printing based on the 2nd row of data, that is, the 2nd row of the 4 rows of data corresponding to the first nozzle group located in the printing region. In the 2nd row of data, the 1 st nozzle column C and the 3rd nozzle column M may not have control data, and only the 2nd nozzle column Y and the 4th nozzle column K may have control data "1". That is, the nozzles on the 2nd nozzle column Y and the nozzles on the 4th nozzle column in the third nozzle group may perform ejection in corresponding voxels. Correspondingly, the fourth nozzle group of the printhead 1012 may perform printing based on the 6th row of data, that is, the 2nd row of the 4 rows of data corresponding to the second nozzle group located in the printing region.

For the third main scanning operation, the printhead 1012 may continue to step one spacing D between adjacent nozzles and deviate the distance (D/4) of voxel q along the same second direction Y, that is (D+D/4), to be located at position 3; and the fourth nozzle group, the third nozzle group, and the second nozzle group on the printhead 1012 may enter the printing region. The second nozzle group may be the first nozzle group located in the printing region, the third nozzle group may be the second nozzle group located in the printing region, and the fourth nozzle group may be the third nozzle group located in the printing region. Therefore, the second nozzle group of the printhead 1012 may perform printing based on the 3rd row of data, that is, the 3rd row of the 4 rows of control data corresponding to the first nozzle group located in the printing region. Correspondingly, the third nozzle group on the printhead 1012 may perform printing based on the 7th row of data, that is, the 3rd row of the 4 rows of data corresponding to the second nozzle group located in the printing region; and the fourth nozzle group on the printhead 1012 may perform printing based on the 11th row of data, that is, the 3rd row of the 4 rows of control data corresponding to the third nozzle group located in the printing region. Similarly, in the 3rd row of data, the 1st nozzle column C may not have control data, that is, the nozzles on the 1st nozzle column C in the first nozzle group may not perform ejection at corresponding voxel positions.

For the fourth main scanning operation, the printhead 1012 may continue to step one spacing D between adjacent nozzles and deviate the distance (D/4) of one voxel q along the same second direction Y, that is (D+D/4), to be located at position 4. The third nozzle group, the second nozzle group, and the first nozzle group of each nozzle column on the printhead 1012 may enter the printing region, while the fourth nozzle group may be outside of the printing region. That is, the first nozzle group may be the first nozzle group located in the printing region, the second nozzle group may be the second nozzle group located in the printing region, and the third nozzle group may be the third nozzle group located in the printing region. Therefore, the first nozzle group on the printhead 1012 may perform printing based on the 4th row of data, that is, the 4th row of the 4 rows of data corresponding to the first nozzle group located in the printing region. Correspondingly, the second nozzle group on the printhead 1012 may perform printing based on the 8th row of data, that is, the 4th row of the 4 rows of data corresponding to the second nozzle group located in the printing region; and the third nozzle group on the printhead 1012 may perform printing based on the 12th row of data, that is, the 4th row of the 4 rows of data corresponding to the third nozzle group located in the printing region. The fourth nozzle group on the printhead 1012 may be outside of the printing region, and the 4th row of the 4 rows of data corresponding to the fourth nozzle group located in the printing region may not have control data, so that nozzles on each nozzle column of the fourth nozzle group may not perform ejection in corresponding voxel positions.

In this manner, the printing based on the 4 rows of data corresponding to the first nozzle group located in the printing region may be completed, that is, the first region of the layer s1, that is, the 1st row of voxels q, may be formed through the first main scanning operation to the fourth main scanning operation.

For fifth main scanning operation, the printhead 1012 may continue to step one spacing D between adjacent nozzles and deviate by the distance (D/4) of one voxel q along the same second direction Y, that is (D+D/4), and the printhead may move to position 5 to continue printing. At this point, the reserved nozzle group, the first nozzle group, and the second nozzle group on the printhead 1012 may be located in the printing region, and the third nozzle group and the fourth nozzle group may be outside of the printing region. Since the four rows of data corresponding to the first nozzle group located in the printing region has been executed for ejection, the reserved nozzle group may be the second nozzle group located in the printing region, the first nozzle group may be the third nozzle group located in the printing region, and the second nozzle group may be the fourth nozzle group located in the printing region. Therefore, the reserved nozzle group on the printhead 1012 may perform printing based on the 5th row of data, that is, the 1st row of data in the 4 rows of data corresponding to the second nozzle group located in the printing region. Correspondingly, the first nozzle group on the printhead 1012 may perform printing based on the 9th row of data, that is, the 1st row of data corresponding to the third nozzle group located in the printing region; and the second nozzle group on the printhead 1012 may perform printing based on the 13th row of data, that is, the 1st row of the 4 rows of data corresponding to the fourth nozzle group located in the printing region. Furthermore, the third and fourth nozzle groups on each nozzle column may be outside of the printing region, so that the nozzles in the third nozzle group and the fourth nozzle group may not perform ejection in corresponding voxel positions.

In this manner, the printing based on the 4 rows of data corresponding to the second nozzle group located in the printing region may be completed, and the second region of the layer s1, that is, the 2nd to 6th rows of voxels q, may be formed through the second main scanning operation to the fifth main scanning operation.

Subsequently, the printhead 1012 may continue to step one spacing D between adjacent nozzles and deviate the distance (D/4) of one voxel q along the same second direction Y, that is (D+D/4), and the printhead may move to position 6 to perform the sixth main scanning operation. At this point, the reserved nozzle group and the first nozzle group on the printhead 1012 may be located in the printing region, while the second nozzle group, the third nozzle group, and the fourth nozzle group may be outside of the printing region. Since the data corresponding to the first nozzle group and the second nozzle group located in the printing region has been executed for ejection, the reserved nozzle group may be the third nozzle group located in the printing region, and the first nozzle group may be the fourth nozzle group located in the printing region. Therefore, the reserved nozzle group on the printhead 1012 may perform printing based on the 10th row of data, that is, the 2nd row of the 4 rows of data corresponding to the third nozzle group located in the printing region; and the first nozzle group may perform printing based on the 14th row of data, that is, the 2nd row of the 4 rows of data corresponding to the fourth nozzle group located in the printing region. In the 14th row of data, the 2nd nozzle column and the 4th nozzle column of the fourth nozzle group located in the printing region may not have control data, that is, the nozzles in the 2nd nozzle column and the 4th nozzle column of the first nozzle group on the printhead 1012 may not perform ejection in the corresponding voxel positions.

In this manner, the printing based on the 4 rows of data corresponding to the third nozzle group located in the printing region may be completed, and the third region of the layer s1, that is, the 7th to 11th rows of voxels q, may be formed through the third main scanning operation to the sixth main scanning operation.

Subsequently, the printhead 1012 may continue to step one spacing D between adjacent nozzles and deviate the distance (D/4) of one voxel q along the same second direction Y, that is (D+D/4), and the printhead may move to position 7 to perform the seventh main scanning operation. At this point, only the reserved nozzle group on the printhead 1012 may be located in the printing region, and the other nozzle groups may be outside of the printing region. Since the printing based on the data corresponding to the first nozzle group, the second nozzle group and the third nozzle group located in the printing region is completed, the reserved nozzle group may be the fourth nozzle group located in the printing region. Therefore, the reserved nozzle group on the printhead 1012 may perform printing based on the 15th row of data, that is, the 3rd row of the 4 rows of data corresponding to the fourth nozzle group located in the printing region. Furthermore, for the 15th row of data, only the 1st nozzle column C has control data "1", that is, for the reserved nozzle group on the printhead 1012, only the nozzles on the 1st nozzle column C may perform ejection at such position; and the nozzles on the 2nd nozzle column Y, the 3rd nozzle column M, and the 4th nozzle column K may not perform ejection at corresponding voxel positions.

In this manner, the printing based on the 4 rows of data corresponding to the fourth nozzle group located in the printing region may be completed, and the fourth region of the layer s1, that is, the 12th row of voxels q, may be formed through the fourth main scanning operation to the seventh main scanning operation.

In the above-mentioned shape-forming process, the printing of each region may be completed through 4 main scanning operations, where between two adjacent main scanning operations, the printhead 1012 may step along the same second direction Y by an equally divided printhead distance and deviate by 1/4 of the spacing between adjacent nozzles, the equally divided printhead distance may be the distance of multiple spacings kD, each spacing being between adjacent nozzles, and k is the quantity of nozzle groups in an equal portion. That is, the distance that the printhead 1012 moves along the second direction Y is kD+D/4. In one embodiment, k=1, that is, the distance that the printhead 1012 moves along the second direction Y may be D+D/4.

Correspondingly, large spacing 4-pass printing may also be that the printhead 1012 may step, along the second direction Y between two adjacent main scanning operations, an equally divided printhead distance and deviate by 1/4 spacing between adjacent nozzles along different directions, that is, the printhead may move kD-D/4. Correspondingly, same as in the small spacing 4-pass printing, the printing order of the 4 rows of data corresponding to each nozzle group may be reverse to the above-mentioned order.

Similarly, the size of the three-dimensional object obj may also be greater than the length of the printhead 1012, and based on the control data 1027, the printing may be performed sequentially according to the above-mentioned method, which may not be repeated in detail herein.

The two ends of the layer s1 formed in such manner may also not have inclined surfaces, and the printing resolution of each material may be 4 times the nozzle resolution of the nozzle column on the printhead 1012.

### Exemplary embodiment two

Various embodiments of the present application also provide a three-dimensional printing system, including the controller 1011, and the printhead 1012 and the printing platform 1013 electrically connected to the controller 1011. The printhead 1012 includes a plurality of nozzles arranged in the form of rows and columns, and at least two nozzle columns are arranged sequentially along the row direction and arranged staggering with each other along the column direction.

The three-dimensional printing system further includes a control data generation module 1024. The control data generation module 1024 is configured to generate the initial control data according to the model data 1021 of the target three-dimensional object, and deviate the initial control data to generate the control data 1027 according to the staggering data 1026 of the nozzle columns, where the staggering data 1026 of the nozzle columns include staggering directions and staggering distances of corresponding nozzles in the at least two nozzle columns which are arranged staggering with each other.

Optionally, the control data generation module 1024 may include a halftone module, configured to provide halftone data and perform a halftone operation on the slice data 1023 to generate the initial control data.

The controller 1011 is configured to according to the control data, control the printhead to perform N main scanning operations relative to each position of the three-dimensional object to print and form the target three-dimensional object, where N is an integral multiple of a quantity of nozzle columns of the printhead which are arranged staggering with each other along the column direction.

The three-dimensional printing system provided by various embodiments controls the generation of the target three-dimensional object through the generated control data by deviating the initial control data according to the staggering data of the nozzle columns, which may eliminate the inclined surfaces at two ends of the shape-forming layer, and improve the shape-forming accuracy of the surface of the target three-dimensional object.

Optionally, the above-mentioned three-dimensional printing system may further include the slice module 1022. The slice module 1022 may be configured to generate the slice data 1023 of the three-dimensional object according to the model data 1021 of the target three-dimensional printing object. The control data generation module 1024 may be further configured to generate the initial control data according to the slice data 1023 and preset parameters.

The deviation direction of the initial control data is opposite to the staggering direction, and the deviation distance of the initial control data is equal to the staggering distance.

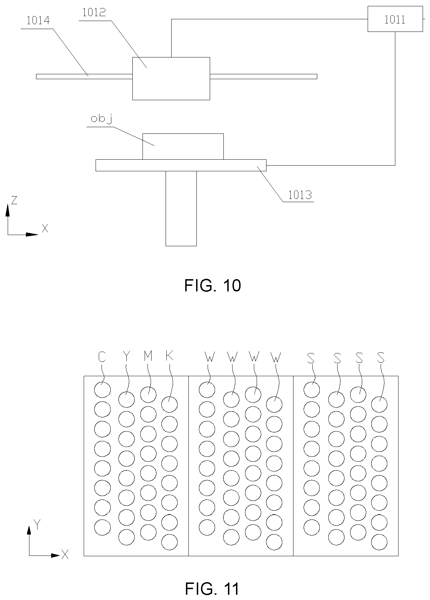

FIG. 10 illustrates a structural schematic of a three-dimensional printing system according to exemplary embodiment two. As shown in FIG. 10, the three-dimensional printing system may further include a three-axis motion mechanism 1014. Both the printhead 1012 and the printing platform 1013 may be connected with the three-axis motion mechanism. The three-axis motion mechanism 1014 may include a first direction driver, a second direction driver, and a third direction driver. The controller 1011 may control the first direction driver to drive the printhead 1012 and the printing platform 1013 to move relative to each other along the row direction of the nozzles; the controller 1011 may control the second direction driver to drive the printhead 1012 and the printing platform 1013 to move relative to each other along the column direction of the nozzles; and the controller 1011 may control the third-direction driver to drive the printhead 1012 and the printing platform 1013 to move relative to each other along the direction perpendicular to the nozzle plane of to form the target three-dimensional object.

Optionally, the preset parameters may be the printing material configuration data 1025 of the nozzles and the printing parameters.

Optionally, the printing parameters may include the quantity N of the N main scanning operations performed by the printhead 1012 relative to each position of the target three-dimensional object and/or the printing resolution of the target three-dimensional object.

Furthermore, in the present application, the plurality of nozzle columns arranged sequentially on the printhead 1012 may also include the nozzle columns for ejecting auxiliary materials, model materials and/or supporting materials. For example, in color printing, transparent material nozzle columns and/or white material nozzle columns may be configured; in order to save printing costs, model material nozzle columns may also be configured. When printing a cantilever structure, a support structure may be needed to support the printing of the three-dimensional object, so that support material nozzle columns may be needed to be configured. Both the auxiliary material nozzle columns and/or the support material nozzle columns may include one or more of the plurality of nozzle columns arranged sequentially along the first direction X. The arrangement sequence of the auxiliary material nozzle columns and/or the support material nozzle columns and the arrangement positions along the second direction may be configured according to actual requirements.

FIG. 11 illustrates a configuration schematic of nozzle columns in the three-dimensional printing system according to exemplary embodiment two. As shown in FIG. 11, four nozzle columns C, Y, M and K may be arranged sequentially along the first direction X and may be arranged staggering along the second direction Y; along the first direction X, four auxiliary material nozzle columns W, W, W and W may be arranged sequentially by aligning with the nozzle columns C, Y, M, and K respectively; and four support material nozzle columns S, S, S and S may be aligned with nozzle columns C, Y, M, and K respectively.

For example, any four of the nozzle columns C, M, Y and K and the four nozzle columns W, W, W and W may perform printing at a same pixel to form a voxel. For example, when the control data of a specific voxel corresponding to the nozzle on the nozzle column C is "0", such nozzle on the nozzle column C may not perform ink ejection at such specific voxel. At this point, the control data of a specific voxel corresponding to the nozzle on the auxiliary material nozzle column W, which corresponds to the nozzle having the control data "0" in the nozzle column C aligned with the auxiliary material nozzle column W, is "1", that is, ejection may be performed in such specific voxel. Therefore, the control data 1027 of the 8 nozzle columns may be obtained according to the method described in the above-mentioned data processing step. Similarly, the control data 1027 of four nozzle columns S, S, S and S, which are arranged sequentially along the first direction X and aligned with the nozzle columns C, Y, M and K in one-to-one correspondence, may also be obtained according to the method described in the above-mentioned data processing step. In order to simplify the printing process, the control data 1027 of the nozzle columns C, M, Y, K, W, and S may be deviated based on a same reference.

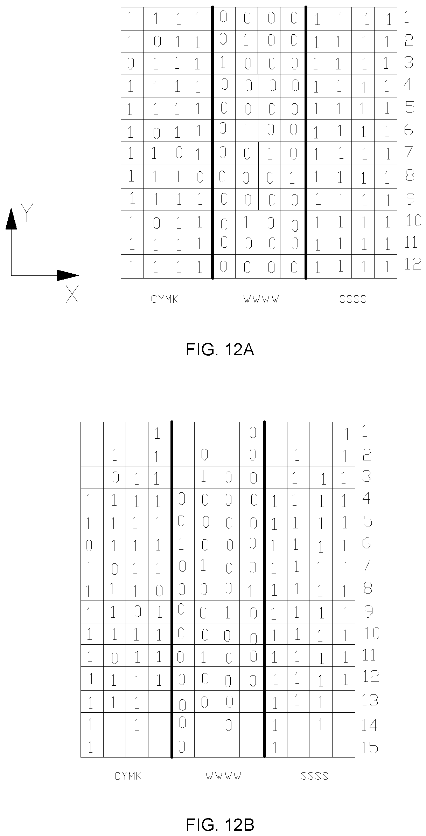

Furthermore, for example, FIG. 12A illustrates a schematic of initial control data generated based on a printhead configuration in the three-dimensional printing system according to exemplary embodiment two; and FIG. 12B illustrates a schematic of control data generated based on a printhead configuration in the three-dimensional printing system according to exemplary embodiment two. As shown in FIGS. 12A-12B, FIGS. 12A-12B may respectively show the initial control data generated based on the configuration data of the nozzle columns of the printhead 1012 and the control data 1027 generated based on the staggering data of the nozzle columns. It should be noted that the difference between FIGS. 12A-12B and FIGS. 5A-5B may be that, since the quantity of the nozzle columns on the printhead 1012 in FIGS. 12A-12B is relatively large, each nozzle column in FIGS. 12A-12B may only show one column of data. Similarly, the square may represent a voxel, the number "1" in the square may indicate that the corresponding nozzle column performs ejection at such position, and the number "0" in the square may indicate that the corresponding nozzle column does not perform ejection at such position. As mentioned above, the control data in the nozzle columns C, Y, M and K may be complementary to the data in the four auxiliary material nozzle columns W, W, W and W, that is, the control data on the nozzle columns C, Y, M and K are "1", so that the control data on the auxiliary material nozzle columns aligned with the nozzle columns C, Y, M and K are "0". As shown in FIG. 10, the staggering data 1026 of the nozzle columns may include that, taking the nozzle column C as the reference, the 12 nozzle columns, which are arranged sequentially along the first direction X, may be sequentially deviated along the -Y direction by 0, D/2, D/ 4, 3D/4, 0, D/2, D/4, 3D/4, 0, D/2, D/4, 3D/4. Therefore, in the 4-pass printing, in the control data 1027 obtained after performing the deviation, the control data of each nozzle column, taking the control data of the nozzle column C as the reference, may be deviated sequentially along the Y direction by the position of 0 voxel q, the position of 2 voxels q, the position of 1 voxel q, the position of 3 voxels q, the position of 0 voxel q, the position of 2 voxels q, the position of 1 voxel q, the position of 3 voxels q, the position of 0 voxel q, the position of 2 voxels q, the position of 1 voxel q, and the position of 3 voxels q. The shape-forming process may be same as that described in the above-mentioned exemplary embodiment one, which may not be repeated in detail herein.

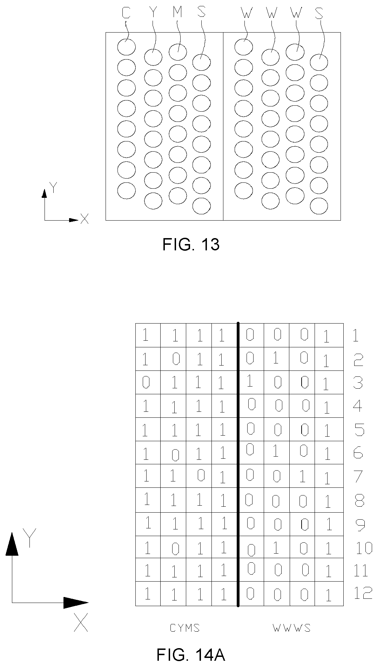

FIG. 13 illustrates another configuration schematic of nozzle columns on the printhead in the three-dimensional printing system according to exemplary embodiment two. As shown in FIG. 13, 3 nozzle columns C, M and Y may be arranged sequentially along the first direction X and arranged staggering along the second direction Y; along the first direction X, 3 auxiliary material nozzle columns W, Wand W may be configured to be aligned with the nozzle columns C, M, and Y respectively; and one or more of the support material nozzle columns S may be arranged staggering with the nozzle columns C, M, and Y Any three of the nozzle columns of C, M and Y and 3 nozzle columns W, Wand W which are arranged sequentially along the first direction X and arranged staggering along the second direction Y may perform printing at a same pixel. Therefore, the control data of the six nozzle columns may be obtained according to the above-mentioned data processing method. In addition, two nozzle columns S and S and the nozzle columns C, M and Y may be arranged staggering with each other. The corresponding control data may be obtained based on the above-mentioned data processing method, thereby generating the control data 1027 for each nozzle column.

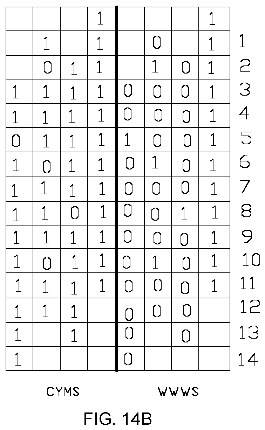

For example, FIG. 14A illustrates a schematic of initial control data generated based on a printhead configuration in the three-dimensional printing system according to exemplary embodiment two; and FIG. 14B illustrates a schematic of control data generated based on a printhead configuration in the three-dimensional printing system according to exemplary embodiment two. As shown in FIGS. 14A-14B, the staggering data 1026 of the nozzle columns may include that, taking the nozzle row C as the reference, the 8 nozzle columns, which are arranged sequentially along the first direction X , may be sequentially deviated along the -Y direction by 0, D/2, D/4, 3D/4, 0 , D/2, D/4, 3D/4. Therefore, in the 4-pass printing, in the control data 1027 obtained after performing the deviation, the control data of each nozzle column, taking the control data of the nozzle column C as the reference, may be deviated sequentially along the Y direction by the position of 0 voxel q, the position of 2 voxels q, the position of 1 voxel q, the position of 3 voxels q, the position of 0 voxel q, the position of 2 voxels q, the position of 1 voxel q, and the position of 3 voxels q. The shape-forming process may be same as that described in the above-mentioned exemplary embodiments one and two, which may not be repeated in detail herein.

In the present application, by deviating the control data of the nozzle columns which are arranged staggering with each other along the column direction in multi-pass printing, the portion of the nozzle columns does not include any control data in the first N rows of data and the last N rows of data, which may avoid inclined surfaces at two ends of the shape-forming layer and improve the shape-forming resolution of the surface of the three-dimensional object.

Those skilled in the art should understand that all or part of the steps in the above-mentioned method embodiments can be implemented by a program instructing relevant hardware. The above-mentioned program may be stored in a computer readable storage medium. When the program is executed, the steps included in the above-mentioned method embodiments may be executed. The above-mentioned storage media may include a read-only memory (ROM), a random-access memory (RAM), a magnetic disk or an optical disk, and other media which may store program code.

In the description of the present application, it should be understood that the terms for indicating orientation or positional relationship, such as "center", "vertical", "horizontal", "upper", "lower", "front", "rear", "left", "right", "vertical", "horizontal", "top", "bottom", "inner", "outer" and the like may be based on the orientation or positional relationship shown in the drawings, which may only for the convenience of describing the present application and simplifying the description, rather than indicating or implying that the referring device or element must have a specific orientation to be constructed and operated in a specific orientation. Therefore, it may not be understood as a restriction on the present application. Furthermore, the terms "first" and "second" may be only used for descriptive purposes, and may not be understood as indicating or implying relative importance or implicitly indicating the number of indicated technical features. Therefore, the features defined with "first" and "second" may explicitly or implicitly include one or more of such features. In the description of the present application, "a plurality of" may indicate two or more unless otherwise specified.

In the description of the present application, it should also be noted that the terms "install", "connected", and "connection" are to be understood broadly unless otherwise specifically stated and defined; for example, it may be a fixed connection, a detachable connection, or an integrated connection; it may be a mechanical connection or an electrical connection; and it may be a direct connection or indirect connection through an intermediate medium and may be an internal connection between the two elements. The specific meanings of the above-mentioned terms in the present application may be understood in the specific circumstances for those skilled in the art.

It should be noted that the above-mentioned disclosed embodiments are exemplary only and are not intended to limit the scope of the present invention as set out in the claims.

## Claims

1. A three-dimensional printing method, using a three-dimensional printing system to print a target three-dimensional object, wherein the three-dimensional printing system includes a controller (1011), a printhead (1012) and a printing platform (1013) which are electrically connected to the controller; the printhead includes a plurality of nozzles arranged in a form of nozzle rows and nozzle columns; and at least two nozzle columns are arranged sequentially along a row direction (X) and are arranged staggering with each other along a column direction (Y), the method comprising:
Step S1: according to model data (1021) of the target three-dimensional object, generating initial control data; and
Step S2: deviating the initial control data to generate control data (1027) according to staggering data of the at least two nozzle columns, wherein the staggering data includes staggering directions and staggering distances of corresponding nozzles in the at least two nozzle columns which are arranged staggering with each other; and
Step S3: according to the control data, controlling the printhead to perform a quantity of N main scanning operations relative to each position of the three-dimensional object to print and form the target three-dimensional object, wherein:
N is an integral multiple of a quantity of nozzle columns of the printhead which are arranged staggering with each other along the column direction;
between two adjacent main scanning operations among the N main scanning operations performed at each position, the controller controls the printhead to move by a moving distance along the column direction of the nozzles, wherein the moving distance is obtained by adding or subtracting a deviation distance based on a step distance;
the deviation distance is equal to a single spacing (D) between adjacent nozzles divided by N, and the step distance is zero or includes multiple spacings, wherein each spacing is a distance between adjacent nozzles; and
a deviation direction of the initial control data is opposite to the staggering direction, and a deviation distance of the initial control data is equal to the staggering distance.

2. The method according to claim 1, wherein, according to the model data of the target three-dimensional object, generating the initial control data includes:
according to the model data of the target three-dimensional object, generating slice data (1023) of the three-dimensional object; and
according to the slice data and preset parameters, generating the initial control data.

3. The method according to claim 2, wherein:
the preset parameters include printing material configuration data (1025) of the nozzles and printing parameters; and
the printing parameters include the quantity N and/or a printing resolution of the target three-dimensional object.

4. The method according to claim 1, wherein according to the control data, controlling the printhead to perform the N main scanning operations relative to each position of the three-dimensional object to print and form the target three-dimensional object includes:
according to the control data, controlling the printhead and the printing platform to move relative to each other along the row direction of the nozzles to perform a main scanning operation;
before performing a next main scanning operation, controlling the printhead and the printing platform to move relative to each other along the column direction of the nozzles;
repeatedly performing a plurality of main scanning operations to form a shape-forming layer of the target three-dimensional object; and
controlling the printhead and the printing platform to move relative to each other along a direction perpendicular to a nozzle plane to superimpose a plurality of shape-forming layers, thereby printing and forming the target three-dimensional object.

5. The method according to claim 1, wherein when the step distance is zero, the N main scanning operations performed at each position are completed, and the controller controls the printhead to move a distance of a length of the printhead relative to a position of the printhead in a first main scanning operation of the performed N main scanning operations along the column direction of the nozzles.

6. The method according to claim 1, wherein a portion of the nozzle columns does not include any control data in first N rows of data and last N rows of data.

7. A three-dimensional printing system, comprising:
a controller (1011), and a printhead (1012) and a printing platform (1013) which are electrically connected to the controller, wherein the printhead includes a plurality of nozzles arranged in a form of nozzle rows and nozzle columns; and at least two nozzle columns are arranged sequentially along a row direction and are arranged staggering with each other along a column direction;
a control data generation module (1024), configured to, according to model data (1021) of the target three-dimensional object, generate initial control data; wherein
the control data generation module is further configured to deviate the initial control data to generate control data (1027) according to staggering data (1026) of the at least two nozzle columns, wherein the staggering data includes staggering directions and staggering distances of each nozzle of nozzles in at least two columns which are arranged staggering with each other; wherein
the controller is configured to, according to the control data, control the printhead to perform N main scanning operations relative to each position of the three-dimensional object to print and form the target three-dimensional object, wherein:
N is an integral multiple of a quantity of nozzle columns of the printhead which are arranged staggering with each other along the column direction;
between two adjacent main scanning operations among the N main scanning operations performed at each position, the controller controls the printhead to move by a moving distance along the column direction of the nozzles, wherein the moving distance is obtained by adding or subtracting a deviation distance based on a step distance;
the deviation distance is equal to a single spacing (D) between adjacent nozzles divided by N, and the step distance is zero or includes multiple spacings, wherein each spacing is a distance between adjacent nozzles; and
a deviation direction of the initial control data is opposite to the staggering direction, and a deviation distance of the initial control data is equal to the staggering distance.

8. The system according to claim 7, further including:
a slice module (1022), configured to, according to the model data of the target three-dimensional object, generate slice data (1023) of the three-dimensional object, wherein:
the control data generation module is further configured to, according to the slice data and preset parameters, generate the initial control data; and
a deviation direction of the initial control data is opposite to the staggering direction, and a deviation distance of the initial control data is equal to the staggering distance.

9. The system according to claim 7, further including:
a three-axis motion mechanism (1014), wherein:
the printhead and the printing platform are both connected with the three-axis motion mechanism; the three-axis motion mechanism includes a first direction driver, a second direction driver, and a third direction driver;
the controller controls the first direction driver to drive the printhead and the printing platform to move relative to each other along the row direction of the nozzles;
the controller controls the second direction driver to drive the printhead and the printing platform to move relative to each other along the column direction of the nozzles; and
the controller controls the third-direction driver to drive the printhead and the printing platform to move relative to each other along a direction perpendicular to a nozzle plane to form the target three-dimensional object.

10. The system according to claim 7, wherein:
the printhead includes a plurality of main material nozzle columns which are arranged sequentially along the row direction and are arranged staggering along the column direction, and includes a plurality of auxiliary material nozzle columns which are configured to be aligned respectively with the plurality of main material nozzle columns along the row direction.

## Patentansprüche

1. Dreidimensionales Druckverfahren unter Verwendung eines dreidimensionalen Drucksystems, um ein dreidimensionales Zielobjekt zu drucken, wobei das dreidimensionale Drucksystem eine Steuereinheit (1011), einen Druckkopf (1012) und eine Druckplattform (1013), die elektrisch an die Steuereinheit angeschlossen sind, beinhaltet; der Druckkopf mehrere Düsen beinhaltet, die in einer Form von Düsenreihen und Düsenspalten angeordnet sind; und mindestens zwei Düsenspalten aufeinanderfolgend entlang einer Reihenrichtung (X) angeordnet sind und zueinander versetzt entlang einer Spaltenrichtung (Y) angeordnet sind, wobei das Verfahren Folgendes umfasst:
Schritt S1: gemäß Modelldaten (1021) des dreidimensionalen Zielobjekts, Erzeugen von Anfangssteuerdaten; und
Schritt S2: Ableiten der Anfangssteuerdaten, um Steuerdaten (1027) gemäß Versatzdaten der mindestens zwei Düsenspalten zu erstellen, wobei die Versatzdaten Versatzrichtungen und Versatzdistanzen entsprechender Düsen in den mindestens zwei Düsenspalten beinhalten, die zueinander versetzt angeordnet sind; und
Schritt S3: gemäß den Steuerdaten, Steuern des Druckkopfs, eine Menge N von Hauptabtastoperationen relativ zu jeder Position des dreidimensionalen Objekts durchzuführen, um das dreidimensionale Zielobjekt zu drucken und zu bilden, wobei:
N ein ganzzahliges Vielfaches einer Menge von Düsenspalten des Druckkopfs ist, die entlang der Säulenrichtung zueinander versetzt angeordnet sind;
zwischen zwei angrenzenden Hauptabtastoperationen unter den N Hauptabtastoperationen, die bei jeder Position durchgeführt werden, die Steuereinheit den Druckkopf steuert, sich um eine Bewegungsdistanz entlang der Säulenrichtung der Düsen zu bewegen, wobei die Bewegungsdistanz erhalten wird, indem eine Abweichungsdistanz auf Basis einer Schrittdistanz addiert oder subtrahiert wird;
die Abweichungsdistanz gleich einem einzelnen Abstand (D) zwischen angrenzenden Düsen geteilt durch N ist und die Schrittdistanz null ist oder mehrere Abstände beinhaltet, wobei jeder Abstand eine Distanz zwischen angrenzenden Düsen ist; und
eine Abweichungsrichtung der Anfangssteuerdaten der Versatzrichtung entgegengesetzt ist und eine Abweichungsdistanz der Anfangssteuerdaten gleich der Versatzdistanz ist.

2. Verfahren nach Anspruch 1, wobei gemäß den Modelldaten des dreidimensionalen Zielobjekts Erstellen der Anfangssteuerdaten Folgendes beinhaltet:
gemäß den Modelldaten des dreidimensionalen Zielobjekts, Erstellen von Teildaten (1023) des dreidimensionalen Objekts; und
gemäß den Teildaten und voreingestellten Parametern, Erstellen der Anfangssteuerdaten.

3. Verfahren nach Anspruch 2, wobei:
die voreingestellten Parameter Druckmaterialkonfigurationsdaten (1025) der Düsen und Druckparameter beinhalten; und
die Druckparameter die Menge N und/oder eine Druckauflösung des dreidimensionalen Zielobjekts beinhalten.

4. Verfahren nach Anspruch 1, wobei gemäß den Steuerdaten Steuern des Druckkopfs, die N Hauptabtastoperationen relativ zu jeder Position des dreidimensionalen Objekts durchzuführen, um das dreidimensionale Zielobjekt zu drucken und zu bilden, Folgendes beinhaltet:
gemäß den Steuerdaten, Steuern des Druckkopfs und der Druckplattform, sich relativ zueinander entlang der Reihenrichtung der Düsen zu bewegen, um eine Hauptabtastoperation durchzuführen;
vor Durchführen einer nächsten Hauptabtastoperation, Steuern des Druckkopfs und der Druckplattform, sich relativ zueinander entlang der Spaltenrichtung der Düsen zu bewegen;
wiederholtes Durchführen mehrerer Hauptabtastoperationen, um eine formgebende Schicht des dreidimensionalen Zielobjekts zu bilden; und
Steuern des Druckkopfs und der Druckplattform, sich relativ zueinander entlang einer Richtung senkrecht zu einer Düsenebene zu bewegen, um mehrere formgebende Schichten übereinanderzulegen, wodurch das dreidimensionale Zielobjekt gedruckt und gebildet wird.

5. Verfahren nach Anspruch 1, wobei, wenn die Schrittdistanz null ist, die N Hauptabtastoperationen, die bei jeder Position durchgeführt werden, abgeschlossen sind und die Steuereinheit den Druckkopf steuert, sich um eine Distanz einer Länge des Druckkopfs relativ zu einer Position des Druckkopfs in einer ersten Hauptabtastoperation der durchgeführten N Hauptabtastoperationen entlang der Spaltenrichtung der Düsen zu bewegen.

6. Verfahren nach Anspruch 1, wobei ein Abschnitt der Düsenspalten in ersten N Datenreihen und letzten N Datenreihen keine Steuerdaten beinhaltet.

7. Dreidimensionales Drucksystem, umfassend:
eine Steuereinheit (1011), und einen Druckkopf (1012) und eine Druckplattform (1013), die elektrisch an die Steuereinheit angeschlossen sind, wobei der Druckkopf mehrere Düsen beinhaltet, die in einer Form von Düsenreihen und Düsenspalten angeordnet sind; und mindestens zwei Düsenspalten aufeinanderfolgend entlang einer Reihenrichtung angeordnet sind und zueinander versetzt entlang einer Spaltenrichtung angeordnet sind;
ein Steuerdatenerstellungsmodul (1024), das dazu konfiguriert ist, gemäß Modelldaten (1021) des dreidimensionalen Zielobjekts Anfangssteuerdaten zu erstellen; wobei
das Steuerdatenerstellungsmodul weiter dazu konfiguriert ist, die Anfangssteuerdaten abzuleiten, um Steuerdaten (1027) gemäß Versatzdaten (1026) der zumindest zwei Düsenspalten zu erstellen, wobei die Versatzdaten Versatzrichtungen und Versatzdistanzen jeder Düse von Düsen in zumindest zwei Spalten beinhalten, die zueinander versetzt angeordnet sind; wobei
die Steuereinheit dazu konfiguriert ist, gemäß den Steuerdaten den Druckkopf zu steuern, N Hauptabtastoperationen relativ zu jeder Position des dreidimensionalen Objekts durchzuführen, um das dreidimensionale Zielobjekt zu drucken und zu bilden, wobei:
N ein ganzzahliges Vielfaches einer Menge von Düsenspalten des Druckkopfs ist, die zueinander versetzt entlang der Spaltenrichtung angeordnet sind;
zwischen zwei angrenzenden Hauptabtastoperationen unter den N Hauptabtastoperationen, die bei jeder Position durchgeführt werden, die Steuereinheit den Druckkopf steuert, sich um eine Bewegungsdistanz entlang der Spaltenrichtung der Düsen zu bewegen, wobei die Bewegungsdistanz erhalten wird, indem eine Abweichungsdistanz auf Basis einer Schrittdistanz addiert oder subtrahiert wird;
die Abweichungsdistanz gleich einem einzelnen Abstand (D) zwischen angrenzenden Düsen geteilt durch N ist und die Schrittdistanz null ist oder mehrere Abstände beinhaltet, wobei jeder Abstand eine Distanz zwischen angrenzenden Düsen ist; und
eine Abweichungsrichtung der Anfangssteuerdaten der Versatzrichtung entgegengesetzt ist und eine Abweichungsdistanz der Anfangssteuerdaten gleich der Versatzdistanz ist.

8. System nach Anspruch 7, weiter beinhaltend:
ein Teilmodul (1022), das dazu konfiguriert ist, gemäß den Modelldaten des dreidimensionalen Zielobjekts Teildaten (1023) des dreidimensionalen Objekts zu erstellen, wobei:
das Steuerdatenerstellungsmodul weiter dazu konfiguriert ist, gemäß den Teildaten und voreingestellten Parametern die Anfangssteuerdaten zu erstellen; und
eine Abweichungsrichtung der Anfangssteuerdaten der Versatzrichtung entgegengesetzt ist und eine Abweichungsdistanz der Anfangssteuerdaten gleich der Versatzdistanz ist.

9. System nach Anspruch 7, weiter beinhaltend:
einen dreiachsigen Bewegungsmechanismus (1014), wobei:
der Druckkopf und die Druckplattform beide an den dreiachsigen Bewegungsmechanismus angeschlossen sind; der dreiachsige Bewegungsmechanismus einen ersten Richtungstreiber, einen zweiten Richtungstreiber und einen dritten Richtungstreiber beinhaltet;
die Steuereinheit den ersten Richtungstreiber steuert, den Druckkopf und die Druckplattform anzutreiben, sich relativ zueinander entlang der Reihenrichtung der Düsen zu bewegen
die Steuereinheit den zweiten Richtungstreiber steuert, den Druckkopf und die Druckplattform anzutreiben, sich relativ zueinander entlang der Spaltenrichtung der Düsen zu bewegen; und
die Steuereinheit den dritten Richtungstreiber steuert, den Druckkopf und die Druckplattform anzutreiben, sich relativ zueinander entlang einer Richtung senkrecht zu einer Düsenebene zu bewegen, um das dreidimensionale Zielobjekt zu bilden.

10. System nach Anspruch 7, wobei:
der Druckkopf mehrere Hauptmaterialdüsenspalten beinhaltet, die aufeinanderfolgend entlang der Reihenrichtung angeordnet sind und versetzt entlang der Spaltenrichtung angeordnet sind, und mehrere Hilfsmaterialdüsenspalten beinhaltet, die dazu konfiguriert sind, jeweils mit den mehreren Hauptmaterialdüsenspalten entlang der Reihenrichtung ausgerichtet zu werden.

## Revendications

1. Procédé d'impression tridimensionnelle utilisant un système d'impression tridimensionnelle pour imprimer un objet tridimensionnel cible, dans lequel le système d'impression tridimensionnelle comprend un contrôleur (1011) ainsi qu'une tête d'impression (1012) et une plate-forme d'impression (1013), qui sont connectées électriquement au contrôleur ; la tête d'impression comprend une pluralité de buses agencées sous la forme de lignes de buses et de colonnes de buses ; et au moins deux colonnes de buses sont agencées séquentiellement selon une direction des lignes (X) et sont agencées de manière décalée selon une direction des colonnes (Y), le procédé comprenant les étapes suivantes :
Étape S1 : conformément aux données de modèle (1021) de l'objet tridimensionnel cible, génération de données de contrôle initiales ; et
Étape S2 : déviation des données de contrôle initiales pour générer des données de contrôle (1027) en fonction des données de décalage desdites au moins deux colonnes de buses, dans lequel les données de décalage comprennent des directions de décalage et des distances de décalage des buses correspondantes dans lesdites au moins deux colonnes de buses qui sont agencées en décalage les unes par rapport aux autres ; et
Étape S3 : conformément aux données de contrôle, contrôle de la tête d'impression afin de mettre en oeuvre une quantité N d'opérations de balayage principal par rapport à chaque position de l'objet tridimensionnel pour imprimer et former l'objet tridimensionnel cible, dans lequel :
N est un multiple entier d'une quantité de colonnes de buses de la tête d'impression qui sont agencées de manière décalée dans la direction des colonnes ;
entre deux opérations de balayage principal adjacentes parmi les N opérations de balayage principal mises en oeuvre à chaque position, le contrôleur commande à la tête d'impression de se déplacer d'une distance de déplacement selon la direction des colonnes de buses, dans lequel la distance de déplacement est obtenue en ajoutant ou en soustrayant une distance de déviation sur la base d'une distance de pas ;
la distance de déviation est égale à un espacement unique (D) entre des buses adjacentes divisé par N, et la distance de pas est nulle ou comprend de multiples espacements, dans lequel chaque espacement est une distance entre des buses adjacentes ; et
une direction de déviation des données de contrôle initiales est opposée à la direction de décalage, et une distance de déviation des données de contrôle initiales est égale à la distance de décalage.

2. Procédé selon la revendication 1 dans lequel, conformément aux données de modèle de l'objet tridimensionnel cible, la génération des données de contrôle initiales comprend :
conformément aux données de modèle de l'objet tridimensionnel cible, la génération de données de tranche (1023) de l'objet tridimensionnel ; et
en fonction des données de tranche et de paramètres prédéfinis, la génération des données de contrôle initiales.

3. Procédé selon la revendication 2, dans lequel :
les paramètres prédéfinis comprennent des données de configuration de matériau d'impression (1025) des buses et des paramètres d'impression ; et
les paramètres d'impression comprennent la quantité N et/ou une résolution d'impression de l'objet tridimensionnel cible.

4. Procédé selon la revendication 1 dans lequel, conformément aux données de contrôle, le contrôle de la tête d'impression afin de mettre en oeuvre les N opérations de balayage principal par rapport à chaque position de l'objet tridimensionnel pour imprimer et former l'objet tridimensionnel cible comprend :
conformément aux données de contrôle, le contrôle de la tête d'impression et de la plate-forme d'impression pour qu'elles se déplacent relativement l'une par rapport à l'autre selon la direction des lignes de buses afin de mettre en oeuvre une opération de balayage principal ;
avant de mettre en oeuvre une opération de balayage principal suivante, le contrôle de la tête d'impression et de la plate-forme d'impression pour qu'elles se déplacent relativement l'une par rapport à l'autre selon la direction des colonnes de buses ;
la mise en oeuvre répétée d'une pluralité d'opérations de balayage principal pour former une couche de formage de l'objet tridimensionnel cible ; et
le contrôle de la tête d'impression et de la plate-forme d'impression pour qu'elles se déplacent relativement l'une par rapport à l'autre selon une direction perpendiculaire à un plan de buses afin de superposer une pluralité de couches de formage, pour ainsi imprimer et former l'objet tridimensionnel cible.

5. Procédé selon la revendication 1 dans lequel, quand la distance de pas est nulle, les N opérations de balayage principal mises en oeuvre à chaque position sont achevées, et le contrôleur commande à la tête d'impression de se déplacer d'une distance d'une longueur de la tête d'impression par rapport à une position de la tête d'impression dans une première opération de balayage principal parmi les N opérations de balayage principal mises en oeuvre selon la direction des colonnes de buses.

6. Procédé selon la revendication 1, dans lequel une portion des colonnes de buses ne comprend aucune donnée de contrôle dans les N premières lignes de données et les N dernières lignes de données.

7. Système d'impression tridimensionnelle, comprenant :
un contrôleur (1011), ainsi qu'une tête d'impression (1012) et une plate-forme d'impression (1013) qui sont électriquement connectées au contrôleur, dans lequel la tête d'impression comprend une pluralité de buses agencées sous la forme de lignes de buses et de colonnes de buses ; et au moins deux colonnes de buses sont agencées séquentiellement selon une direction des lignes et sont agencées de manière décalée selon une direction des colonnes ;
un module de génération de données de contrôle (1024) configuré pour, en fonction des données de modèle (1021) de l'objet tridimensionnel cible, générer des données de contrôle initiales ; dans lequel
le module de génération de données de contrôle est en outre configuré pour dévier les données de contrôle initiales afin de générer des données de contrôle (1027) en fonction des données de décalage (1026) desdites au moins deux colonnes de buses, dans lequel les données de décalage comprennent des directions de décalage et des distances de décalage de chacune des buses dans au moins deux colonnes agencées de manière décalée ; dans lequel
le contrôleur est configuré pour, en fonction des données de contrôle, contrôler la tête d'impression afin de mettre en oeuvre N opérations de balayage principal par rapport à chaque position de l'objet tridimensionnel pour imprimer et former l'objet tridimensionnel cible, dans lequel :
N est un multiple entier d'une quantité de colonnes de buses de la tête d'impression qui sont agencées de manière décalée dans la direction des colonnes ;
entre deux opérations de balayage principal adjacentes parmi les N opérations de balayage principal mises en oeuvre à chaque position, le contrôleur commande à la tête d'impression de se déplacer d'une distance de déplacement selon la direction des colonnes de buses, dans lequel la distance de déplacement est obtenue en ajoutant ou en soustrayant une distance de déviation sur la base d'une distance de pas ;
la distance de déviation est égale à un espacement unique (D) entre des buses adjacentes divisé par N, et la distance de pas est nulle ou comprend de multiples espacements, dans lequel chaque espacement est une distance entre des buses adjacentes ; et
une direction de déviation des données de contrôle initiales est opposée à la direction de décalage, et une distance de déviation des données de contrôle initiales est égale à la distance de décalage.

8. Système selon la revendication 7, comprenant en outre :
un module de tranche (1022) configuré pour, conformément aux données de modèle de l'objet tridimensionnel cible, générer des données de tranche (1023) de l'objet tridimensionnel, dans lequel :
le module de génération de données de contrôle est en outre configuré pour, en fonction des données de tranche et de paramètres prédéfinis, générer les données de contrôle initiales ; et
une direction de déviation des données de contrôle initiales est opposée à la direction de décalage, et une distance de déviation des données de contrôle initiales est égale à la distance de décalage.

9. Système selon la revendication 7, comprenant en outre :
un mécanisme de mouvement à trois axes (1014), dans lequel :
la tête d'impression et la plate-forme d'impression sont toutes deux connectées au mécanisme de mouvement à trois axes ;
le mécanisme de mouvement à trois axes comprend un entraînement de première direction, un entraînement de deuxième direction et un entraînement de troisième direction ;
le contrôleur commande à l'entraînement de première direction de déplacer la tête d'impression et la plate-forme d'impression l'une par rapport à l'autre selon la direction des lignes de buses ;
le contrôleur commande à l'entraînement de deuxième direction de déplacer la tête d'impression et la plate-forme d'impression l'une par rapport à l'autre selon la direction des colonnes de buses ; et
le contrôleur commande à l'entraînement de troisième direction de déplacer la tête d'impression et la plate-forme d'impression l'une par rapport à l'autre selon une direction perpendiculaire à un plan de buses pour former l'objet tridimensionnel cible.

10. Système selon la revendication 7, dans lequel :
la tête d'impression comprend une pluralité de colonnes de buses de matériau principal qui sont agencées séquentiellement selon la direction des lignes et qui sont agencées de manière décalée selon la direction des colonnes, et comprend une pluralité de colonnes de buses de matériau auxiliaire qui sont configurées pour être alignées respectivement avec la pluralité de colonnes de buses de matériau principal selon la direction des lignes.
